# FASCICULE DE BREVET EUROPEEN

(11) **EP 0 319 364 B1**
(45) Date de publication et mention de la délivrance du brevet: **03.03.1993**
(21) Numéro de dépôt: 88402896.0
(22) Date de dépôt: 18.11.1988
(51) Int. Cl.: C01F 7/02, C09C 1/40

(54) **Procédé de préparation de granules à base d'oxyde d'aluminium et produits ainsi obtenus**
Verfahren zur Herstellung von Granulat aus Aluminiumoxid und Produkte daraus
Process for the preparation of granules of aluminium oxide, and products therefrom

(30) Priorité: 30.11.1987 FR 8716550
(43) Date de publication de la demande: 07.06.1989
(73) Titulaire: RHONE-POULENC CHIMIE, 92408 Courbevoie Cédex (FR)
(72) Inventeur: Parmentier, François, F-69007 Lyon (FR)
(74) Mandataire: Dubruc, Philippe

(56) Documents cités:
- EP-A- 0 184 506
- FR-A- 1 331 039
- FR-A- 2 527 197
- FR-A- 2 583 761

## Description

La présente invention a pour objet un procédé de préparation de granulés à base d'oxyde d'aluminium, de même que les granulés ainsi obtenus.

Les produits à base d'oxyde d'aluminium sont bien connus et ont de nombreuses applications.

Bien que ces produits existent déjà sous forme de granulés ou de billes le besoin se fait toujours sentir d'améliorer encore les produits obtenus sur un ou éventuellement plusieurs aspects à la fois. C'est ainsi que l'on cherche à avoir notamment des produits moins fragiles, à plus grande porosité et présentant des tailles moyennes pouvant varier dans une large gamme. Il est aussi intéressant d'avoir des produits qui pour une taille donnée possèdent une répartition granulométrique étroite.

La demande de brevet FR-A-2527197 décrit un procédé de fabrication de billes d'alumine basé sur la méthode de la coagulation en gouttes d'une suspension aqueuse d'alumine se présentant sous forme d'une émulsion de type huile dans l'eau ; cette émulsion est constituée d'une phase organique, d'une phase aqueuse et d'un agent de surface ou émulsionnant à tendance hydrophile ; ce procédé ne permet pas d'obtenir des billes d'alumine dont la taille moyenne varie dans une gamme assez large.

Le document EP-A-0170841 divulgue des grains d'alumine modifiée par des oxydes métalliques, notamment des oxydes de cérium et des oxydes de lithium, ces grains ayant par exemple un diamètre moyen de 2,8 mm et un volume poreux de 0,9 cm³/g.

Par ailleurs, dans certains cas, les procédés de préparation des produits sous forme de granulés ou billes mettent en oeuvre des atomiseurs.

Ces appareils imposent des conditions sur les suspensions à atomiser et notamment sur leur teneur en matière sèche qui ne peut dépasser une certaine valeur maximale. Ils nécessitent aussi un entretien important.

Les procédés par atomisation présentent aussi l'inconvénient de limiter à une certaine gamme de granulométrie les produits obtenus.

Un autre problème s'est donc aussi posé à savoir la simplification et l'amélioration des procédés de préparation.

Un premier objet de l'invention est donc la mise au point de produits présentant des caractéristiques nouvelles ou améliorées.

Un second objet de l'invention est aussi la simplification et l'amélioration des procédés pour l'obtention notamment de ces produits.

Dans ce but le procédé de préparation selon l'invention de granulés à base oxyde d'aluminium, est caractérisé en ce qu'il comporte les étapes suivantes :
- on met en présence et on mélange une suspension ou un sol dudit oxyde, au moins un hydrophobant du type cationique ou amphotère et au moins un solvant organique peu ou non miscible à l'eau, ce par quoi on obtient une phase liquide substantiellement exempte dudit oxyde et des granulés à base dudit oxyde ;
- on sépare la phase liquide précitée des granulés ;
- éventuellement on lave, on sèche et on calcine lesdits granulés.

L'invention concerne aussi des granulés susceptibles notamment d'être préparés par le procédé ci-dessus, à base d'oxyde d'aluminium, caractérisés en ce qu'ils sont poreux, qu'ils ont un volume spécifique d'au moins 0,1 cm3/g et en ce qu'ils présentent de préférence une forme sensiblement sphérique.

D'autres caractéristiques et avantages de l'invention seront mieux compris à la lecture de la description et des exemples concrets mais non limitatifs qui vont suivre.

Le procédé de l'invention consiste essentiellement à mettre en présence et à mélanger une suspension ou un sol d'un oxyde d'aluminium, un hydrophobant et un solvant organique. La Demanderesse a découvert qu'en opérant dans certaines conditions on pouvait obtenir une granulation. Ces différentes conditions vont maintenant être étudiées en détail.

### Suspension ou sol de départ

Le procédé de l'invention part d'une suspension ou d'un sol généralement en milieu aqueux d'un oxyde d'aluminium. Cette suspension ou ce sol peuvent être obtenus d'une manière quelconque.

Il y a lieu de noter ici, et ceci est valable pour toute la description, que le terme oxyde doit être pris au sens large, notamment comme s'appliquant en outre aux oxydes hydratés ou aux hydroxydes susceptibles d'être obtenus par les procédés qui vont être rappelés ci-dessous à titre d'exemples étant bien entendu que ces procédés ne font pas partie de l'invention.

Il faut aussi prendre en compte que la suspension d'oxyde de départ peut être soit une suspension obtenue directement par action d'un réactif sur un précurseur de l'oxyde d'aluminium soit une suspension obtenue par mise en dispersion dans l'eau de cet oxyde pulvérulent préalablement préparé, éventuellement séché et calciné.

En ce qui concerne l'oxyde d'aluminium, la suspension peut notamment être obtenue par réaction d'un aluminate avec un acide ou d'un sel d'aluminium avec une base, ou encore par hydrolyse d'un alcoolate d'aluminium.

On peut mentionner par ailleurs les procédés de préparations d'alumine décrits dans les brevets français N° 1.261.182, 1.381.282, 2.449.650, 2.520.722.

### Hydrophobant

Le procédé de l'invention met aussi en oeuvre un hydrophobant.

Selon une caractéristique importante de l'invention cet hydrophobant doit être un hydrophobant cationique ou amphotère.

Les hydrophobants convenant aux procédés de l'invention pourront être choisis notamment dans le groupe comprenant les amines primaires, secondaires, tertiaires ou leurs sels, les sels d'ammonium quaternaire, les amino-acides, ou leurs sels.

En ce qui concerne les amines ont peut tout d'abord utiliser les amines légères. On entend par là les amines dont le nombre d'atomes de carbone de leur chaîne hydrocarbonée est au plus égal à 6. On emploie plus particulièrement les amines en C₄-C₆.

On utilise aussi de préférence les amines aliphatiques.

A titre d'exemple, on peut citer la n-butylamine, la cyclohexylamine, l'hexylamine.

On peut ausi utiliser les amines grasses. Pour fixer les idées, on peut entendre par là les amines dont les substituants sont des chaînes carbonées présentant un nombre d'atomes de carbone supérieur à 6 et plus particulièrement supérieur ou égal à 10.

Dans le cadre des amines tertiaires, on peut citer les dimethylalkyl amines grasses de formule RN(CH₃)₂ R étant notamment un radical en C₈-C₂₂ en particulier C₈-C₁₈, et par exemple un radical correspondant à la chaine carbonée des acides gras de suif, de coprah, d'acide oléique, hydrogènés ou non.

Dans ce même groupe on peut aussi citer les dialkylmethyl amines grasses de formule R₂NCH₃ le radical R étant défini comme dans le paragraphe précédent.

Toujours dans le même groupe conviennent aussi les trialkyl amines grasses de formule R₃N, R étant défini comme précédemment.

Comme sels d'amines primaires, secondaires ou tertiaires on peut utiliser les acétates.

Par ailleurs, on pourra utiliser les sels d'ammonium quaternaire de formule (1) 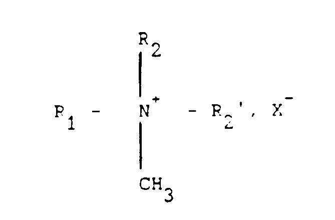
R₁ étant un radical alkyle ou alcényle avec de préférence un nombre d'atomes de carbone égal ou supérieur à 6 et plus particulièrement égal ou supérieur à 10, R₂ et R₂′ étant des radicaux alkyle, alkyle-oxy ou alkyl-phenyle identiques ou différents, X étant un anion.

Parmi ces sels on utilise principalement les chlorures et les sulfates.

On peut citer comme hydrophobants de cette catégorie qui conviennent bien celui dans lequel R₁ est le radical coprah, R₂ est le radical benzyle, R′₂ le radical methyl, l'anion étant le chlore, produit commercialisé sous la marque NORAMIUM DA 50, et celui dans lequel R₁ est le radical correspondant à la chaine carbonée de l'acide gras de suif, R₂ et R′₂ sont identiques et représentent le methyl, produit commercialisé sous la marque NORAMIUM MS80.

Il est aussi possible d'utiliser des diamines sans sortir du cadre de l'invention.

On peut mentionner les diamines de formule RNH-(CH₂)₃-NH₂ dans laquelle R est tel que défini précedemment.

Il est aussi possible d'utiliser des diammoniums quaternaires de formule (2) :

R₃ R₄ R₅ N⁺ - (CH₂)ₙ - N⁺R₆R₇R₈, 2X⁻

R₃ étant un radical alkyle ou alcenyle avec un nombre d'atomes de carbone égal ou supérieur à 8 ;
R₄ R₅ R₆ R₇ et R₈ étant l'hydrogène ou des radicaux alkyles,
R₄ R₅ R₆ ou R₇ pouvant être identiques ou différents ; n'étant un nombre compris entre 1 et 3,
X étant un anion.

Un exemple de ce type de produit est celui dans lequel n = 3, R₄ = R₅ = R₆ = R₇ = R₈ = CH₃, X est le chlore, produit commercialisé sous la marque DUOQUAD.
On peut aussi citer les sels de diamines de formule (3) : 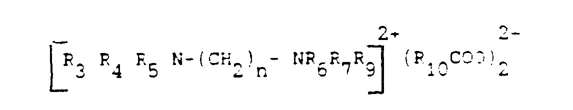
R₃, R₄, R₅, R₆, R₇ et n étant tels que précédemment definis, R₉ étant l'hydrogène ou un radical alkyle, R₁₀ étant un radical alkyle, avec un nombre d'atomes de carbone égal ou supérieur a 8.

On peut citer comme exemple les dioléates de diamine.

On peut aussi utiliser avantageusement les amino-acides de formule (4) ou (5) 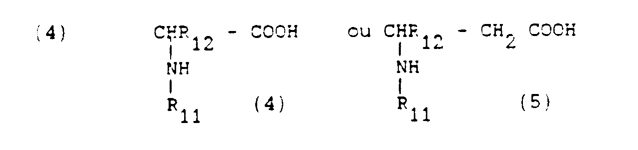
R₁₁, R₁₂ étant l'hydrogène ou un radical alkyl, avec comme conditions que R₁₁ et R₁₂ ne soient pas simultanément l'hydrogène.

On peut citer notamment dans ce cas la lauryl bétaïne (R₁₁ = C₁₂,R₁₂ = H) vendue sous la marque ARMOTERIC LB.

Comme autres composés intéressants pour la mise en oeuvre du procédé de l'invention on peut mentionner ceux de formule (6) 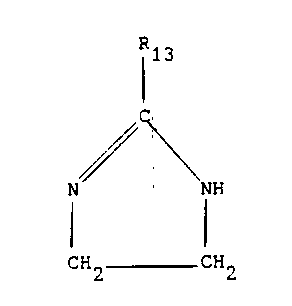
dans laquelle R₁₃ est un radical alkyle en C₈-C₂₂ en particulier C₈-C₁₈ et par exemple correspondant à la chaine carbonée des acides gras de suif, de coprah, de l'acide oléique, hydrogénés ou non, ou des sels des dérivés de formule (7x) 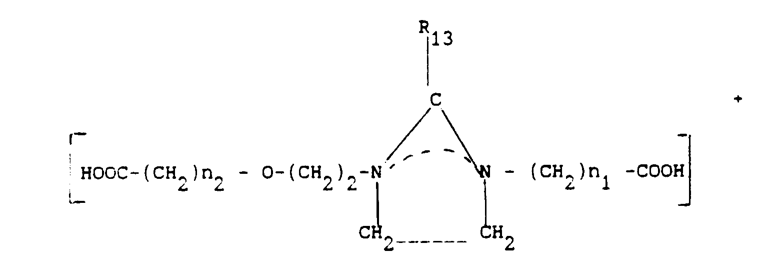
dans laquelle n₁ et n₂ sont des nombres entiers identiques ou différents pouvant varier entre 1 et 4.

On pourra citer plus particulièrement les produits commercialisés sous les marques suivantes.

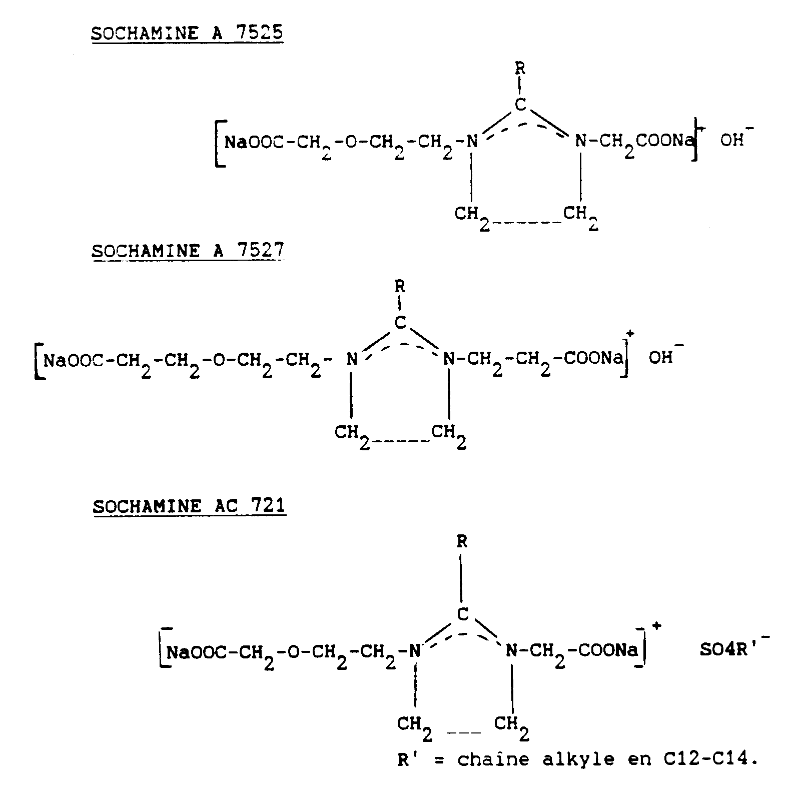

R désignant le radical coprah
On peut enfin citer des dérivés pyridinium de formule (8). R₁₄-C₅H₄ NR₁₅ ⁺ X⁻, X étant un halogène, notamment le chlore, R₁₄ étant un radical correspondant à la chaine carbonée d'un acide gras, notamment un radical en C₁₆,
R₁₅ étant un alkyl, plus particulièrement CH₃.

### Solvant

Enfin le procédé de l'invention utilise un solvant organique peu ou pas miscible à l'eau.Il va de soi que le solvant doit être compatible avec l'hydrophobant utilisé.

Ce solvant pourra être choisi dans le groupe comprenant les esters, les éthers et les cétones et de préférence les dérivés aliphatiques de ceux-ci.

En ce qui concerne les esters aliphatiques on peut utiliser en particulier les formiates, les acétates, les propionates, les butyrates, les oxalates, les phosphates et lactates.

On préfère les acétates, notamment les acétates d'éthyle, d'isopropyle et de butyle.

Parmi les éthers on citera notamment l'éther diisopropylique.

Les cetones aliphatiques peuvent être avantageusement choisies pour la mise en oeuvre du procédé de l'invention. On pourra citer tout particulièrement la méthyl-isobutyl cétone, l'éthyl-isopropyl cétone.

Comme autres types de solvants utilisables figurent les solvants aromatiques ou hydrocarbures benzéniques.

On peut utiliser tout particulièrement le xylène et le toluène. Les dérivés halogènés et notamment chlorés de ces solvants peuvent aussi être employés par exemple le chlorobenzene.

Par ailleurs, un autre type de solvants utilisables est celui des carbures aliphatiques halogènés ou hydrocarbures alicycliques halogènés.

On peut citer les carbures aliphatiques ou alicycliques halogènés à chaînes courtes en C₁-C₄. Ils correspondent aux produits vendus sous la marque FLUGENE.

On peut citer notamment le trichlorotrifluoroéthane, le dichlorotétrafluoréthane.

On peut mentionner comme solvants envisageables les carbures éthyléniques halogènés.

On pourra citer particulièrement dans ce cas le dichloréthylène, le trichloréthylène et le tétrachloréthylène.

Tous les solvants décrits ci-dessus peuvent bien entendu être utilisés seuls ou en combinaison.

La quantité d'hydrophobant à utiliser varie en fonction de la surface (surface BET) de l'oxyde présent dans la suspension ou le sol de départ. Cette quantité est d'autant plus grande que cette surface est importante. Généralement elle est comprise entre 0,1 % et 100 % plus particulièrement entre 0,5 et 40 % en poids par rapport au poids d'oxyde exprimé en matière sèche, c'est-à-dire par rapport à la quantité d'oxyde dans la suspension ou le sol.

Toutefois, dans le cas des amines légères miscibles à l'eau, les quantités utilisées pourront éventuellement être supérieures à celles mentionnées plus haut.

La quantité maximale d'hydrophobant n'est pas en soi critique. On peut dire à titre d'exemple qu'en pratique elle est d'au plus 200 %.

La quantité de solvant est aussi fonction du type d'oxyde de la même manière que décrite plus haut pour l'hydrophobant. Cette quantité est généralement telle que le rapport volume de solvant exprimé en litre/poids d'oxyde en kg (toujours calculé par rapport à l'oxyde présent dans la suspension ou le sol) varie entre 0,1 et 5, de préférence 0,2 et 3.

En fait les quantités de solvant et d'hydrophobant sont liées et dépendent aussi de la nature de l'hydrophobant. Pour une quantité d'hydrophobant fixée, il existe une quantité minimale de solvant en deçà de laquelle il n'y a pas agglomération de l'oxyde d'aluminium. Il existe aussi une quantité maximale au delà de laquelle il y a collage des granulés formés et obtention d'une masse compacte d'oxyde.

Généralement, ces quantités minimales et maximales sont situées dans les fourchettes de valeur indiquées plus haut.

La mise en présence de la suspension ou du sol, de l'hydrophobant et du solvant peut se faire de plusieurs manières.

Selon une première manière on mélange dans un premier temps la suspension ou le sol d'oxyde avec le solvant et on introduit dans un deuxième temps l'hydrophobant dans le mélange ainsi obtenu .

Selon une seconde manière, on mélange dans un premier temps la suspension d'oxyde et l'hydrophobant et, dans un deuxième temps, on ajoute le solvant au mélange ainsi obtenu.

Selon une troisième manière préférentielle dans le cas d'hydrophobants peu solubles dans l'eau, par exemple les amines grasses, on peut mélanger préalablement le solvant et l'hydrophobant et mettre en présence ce mélange avec la suspension ou le sol d'oxyde.

La mise en présence de la suspension ou du sol, de l'hydrophobant et du solvant se fait sous agitation. On pourra utiliser tout type d'agitation, en particulier un agiteur du type à turbine.

La granulométrie des produits obtenus varie généralement en fonction de la puissance de l'agitation. La granulométrie est d'autant plus fine que la puissance d'agitation est élevée.

La température à laquelle se fait le mélange n'est en principe pas critique. Elle pourra varier généralement entre la température ambiante et 80°C.

Toutefois, en ce qui concerne la température, les amines légères miscibles, à l'eau constituent aussi un cas particulier. En effet, on s'est aperçu que cette température doit être de préférence d'autant plus élevée que le nombre d'atomes de carbone de l'amine utilisée est faible.

Pour les amines en C₄ ou moins, cette température sera, généralement d'au moins 50°C et plus particulièrement d'au moins 80°C.

Pour les amines C₅ -C₆, cette température est aussi fonction du solvant et de leur solubilité dans l'eau. Généralement, cette température est d'autant plus élevée que cette solubilité est grande.

On notera enfin qu'avec les hydrophobants décrits plus haut, il convient de préférence que le pH du mélange suspension ou sol, hydrophobant, solvant au moment de la granulation soit supérieur au pH correspondant au point isoélectrique de l'oxyde d'aluminium que l'on cherche à granuler.

Une fois l'agitation du milieu réactionnel terminée, on obtient des granulés d'oxyde d'aluminium et une phase liquide qui est généralement une phase aqueuse.

Une deuxième étape consiste à séparer les granulés et la phase liquide obtenus. Cette séparation peut se faire par tout moyen connu, par exemple filtre à bande ou centrifugeuse.

Cette séparation se fait facilement. Il s'agit là d'un des avantages du procédé de l'invention.

Les granulés ainsi obtenus peuvent être lavés si nécessaire. Ce lavage peut se faire avec de l'eau ou de l'eau saturée en solvant.

Outre le lavage, les granulés de l'invention peuvent être éventuellement séchés et/ou, si nécessaire calcinés. Ce séchage et cette calcination peuvent être réalisés selon tout moyen connu.

L'invention concerne aussi les granulés susceptibles d'être obtenus par le procédé qui vient d'être décrit.

Comme cela a été indiqué plus haut, le produit selon l'invention se caractérise essentiellement par sa structure. Il se présente préférentiellement sous forme de granulés sensiblement sphériques. Ces granulés sont en outre poreux. Le produit de l'invention présente ainsi un volume spécifique d'au moins 0,1 cm3/g plus particulièrement d'au moins 0,3 cm3/g et notamment compris entre 0,5 et 2 cm3/g.

Les volumes spécifiques sont déterminés selon la norme ASTM D4284-83. Les porosités données reflètent les porosités intra-granulés.

La granulométrie peut varier dans de larges limites.

Les granulés peuvent ainsi présenter une taille moyenne d'au moins 50 µm, notamment d'au moins 200 µm.

Selon un mode de réalisation particulier on peut avoir des granulés de taille moyenne d'au moins 0,2 mm, notamment comprise entre 0,5 et 2 mm et d'une manière plus générale comprise entre 0,5 et 20 mm.

Par ailleurs, les granulés de l'invention peuvent présenter une densité apparente tassée selon la norme AFNOR N° 030100 d'au moins 0,2, et plus particulièrement comprise entre 0,5 et 1,5.

Les granulés de l'invention peuvent enfin contenir une certaine quantité d'hydrophobant, par exemple entre 0,1 et 30 % en poids ce qui peut être utile pour certaines applications.

Les granulés ainsi obtenus se prêtent à toutes les applications connues de l'oxyde d'aluminium, par exemple, ils peuvent être utilisés comme charge, liant, agent absorbant, catalyseur, support de catalyseur.

Des exemples concrets mais non limitatifs de l'invention vont maintenant être donnés.

### EXEMPLE 1

A 710 g d'une suspension à 7,5 % d'alumine obtenue par précipitation d'aluminate de soude par CO₂ et introduite dans un réacteur de 1 litre équipé de contre-pales et agitée par une turbine Rushton de diamètre 50 mm tournant à 800 T/min, on ajoute progressivement en 10 minutes 35 ml d'hexylamine puis 180 ml de FLUGENE 113 (Trichloro-1,1,2, trifluoro-1,2,2 éthane). Le milieu ainsi constitué est laissé sous agitation 30 minutes.

On observe une granulation. On filtre et on lave le gâteau obtenu.

On obtient des granulés sous forme de billes présentant une taille moyenne de 0,6 mm.

### EXEMPLE 2

Un milieu contenant 700 g d'eau permutée et en suspension 100 g d'alumine broyée obtenue par déshydratation rapide d'hydrargillite dans un courant d'air chaud (taille moyenne 10 µm) est mis sous agitation comme précédemment.

Le pH du milieu est de 8,7.

On introduit progressivement dans ce milieu en 10 minutes, 46 g d'un mélange de cyclohexane et de n-hexylamine 40/60 en poids.

Après 30 minutes d'agitation, le milieu est filtré sur buchner et le solide séché à l'étuve sur azote 12 heures à 100°C.

Le produit Al₂O₃ est obtenu granulé, avec une taille moyenne de 100 µm et une densité apparente tassée de 0,89.

### EXEMPLE 3

Un milieu contenant 700 g d'eau permutée et en suspension 100 g d'alumine broyée identique à celle de l'exemple 2 est mis sous agitation comme précédemment.

Le pH du milieu est de 8,7.

On introduit rapidement dans ce milieu 56 g de méthylisobutylcétone ; puis le milieu est amené à pH = 10 par ajout d'une solution de soude à 10 % en poids dans l'eau.

On ajoute progressivement en 10 minutes, 32 g d'une solution de Noramium DA50 à 10 % d'extrait sec dans l'eau permutée.

Après 30 minutes d'agitation, le milieu est filtré sur buchner et séché à l'étuve sous azote 12 heures à 100°C.

Le produit Al₂O₃ est obtenu granulé, avec une taille moyenne de 62 µm et une densité apparente tassée de 0,94.

Bien entendu, l'invention n'est nullement limitée aux modes de realisation décrits qui n'ont été donnés qu'a titre d'exemples. En particulier, elle comprend tous les moyens constituant des équivalents techniques des moyens décrits ainsi que leurs combinaisons si celles-ci sont mises en oeuvre dans le cadre de la protection comme revendiquée.

## Revendications

1. Procédé de préparation de granulés à base d'oxyde d'aluminium, caractérisé en ce qu'il comporte les étapes suivantes :
- on met en présence et on mélange sous agitation une suspension ou un sol aqueux dudit oxyde, au moins un hydrophobant du type cationique ou amphotère et au moins un solvant organique peu ou non miscible à l'eau, ce par quoi on obtient une phase liquide substantiellement exempte dudit oxyde et des granulés à base dudit oxyde ;
- on sépare la phase liquide précitée des granulés ;
- éventuellement on lave, on sèche et on calcine lesdits granulés.

2. Procédé selon la revendication 1, caractérisé en ce qu'on utilise au moins un hydrophobant choisi dans le groupe comprenant les amines primaires, secondaires, tertiaires ou leurs sels, les sels d'ammoniums quaternaires, les amino-acides ou leurs sels.

3. Procédé selon la revendication 2 caractérisé en ce qu'on utilise au moins un hydrophobant choisi dans le groupe des amines à nombres d'atomes de carbone au plus égal à 6.

4. Procédé selon la revendication 2 ou 3, caractérisé en ce qu'on utilise une amine aliphatique.

5. Procédé selon la revendication 2, caractérisé en ce qu'on utilise des amines grasses.

6. Procédé selon la revendication 2 ou 5, caractérisé en ce qu'on utilise les acétates comme sels d'amines primaires, secondaires ou tertiaires.

7. Procédé selon l'une quelconque des revendications 2 à 6 caractérisé en ce qu'on utilise une diamine à titre d'hydrophobant.

8. Procédé selon la revendication 7, caractérisé en ce qu'on utilise une diamine de formule RNH - (CH₂)₃ - NH₂, R étant un radical en C₈ - C₂₂.

9. Procédé selon la revendication 2 caractérisé en ce qu'on utilise un sel d'ammonium quaternaire de formule (1) 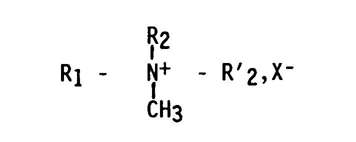 R₁ étant un radical alkyle ou alcényle avec de préférence un nombre d'atomes de carbone égal ou supérieur à 6,
R₂ et R'₂ étant des radicaux alkyle, alkyle-oxy ou alkyl-phényle identiques ou différents, X étant un anion.

10. Procédé selon la revendication 2 caractérisé en ce qu'on utilise des diammoniums quaternaires de formule (2) :
R₃ R₄ R₅ N⁺ - (CH₂)ₙ - N⁺R₆R₇R₈,2X⁻
R₃ étant un radical alkyle ou alcényle avec un nombre d'atomes de carbone égal ou supérieur à 8 ;
R₄ R₅ R₆ R₇ et R₈ étant l'hydrogène ou des radicaux alkyles,
R₄ R₅ R₆ ou R₇ pouvant être identiques ou différents ; n étant un nombre compris entre 1 et 3.
X étant un anion.

11. Procédé selon la revendication 7 caractérisé en ce qu'on utilise les sels de diamines de formule (3) :
[R₃ R₄ R₅ N-(CH₂)ₙ - NR₆ R₇ R₉]²⁺ (R₁₀ COO)₂ ²⁻
R₃, R₄, R₅, R₆, R₇ et n étant tels que précédemment définis, R₉ étant l'hydrogène ou un radical alkyle, R₁₀ étant un radical alkyle, avec un nombre d'atomes de carbone égal ou supérieur à 8.

12. Procédé selon la revendication 2 caractérisé en ce qu'on utilise les amino-acides ou leurs sels de formule (4) ou (5) : 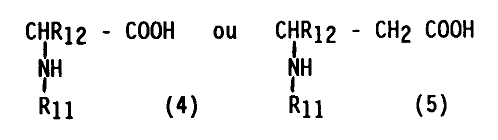 R₁₁,R₁₂ étant l'hydrogène ou un radical alkyl, R₁₁ et R₁₂ n'étant pas simultanément l'hydrogène.

13. Procédé selon l'une des revendications 1 ou 2 caractérisé en ce qu'on utilise comme hydrophobant des composés de formule (6): 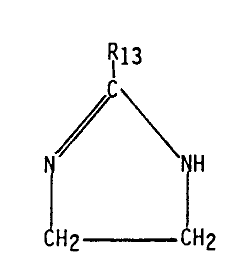 dans laquelle R₁₃ est un radical alkyl en C₈ - C₂₂, ou des sels des dérivés de formule (7) : 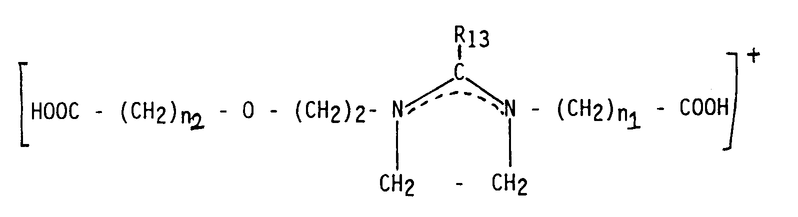 dans laquelle n₁ et n₂ sont des nombres entiers identiques ou différents pouvant être compris entre 1 et 4.

14. Procédé selon l'une des revendications 1 ou 2 caractérisé en ce qu'on utilise comme hydrophobant des composés de formule (8) :
R₁₄ - C₅H₄ - NR⁺₁₅, X⁻
X étant un halogène, notamment le chlore, R₁₄ étant un radical correspondant à la chaîne carbonée d'un acide gras, R₁₅ étant un radical alkyl.

15. Procédé selon l'une quelconque des revendications 1 à 14, caractérisé en ce qu'on utilise un solvant choisi dans le groupe comprenant les esters, les éthers et les cétones.

16. Procédé selon la revendication 15 caractérisé en ce qu'on utilise comme solvant un ester acétique.

17. Procédé selon l'une quelconque des revendications 1 à 14 caractérisé en ce qu'on utilise un solvant choisi dans le groupe des hydrocarbures benzéniques.

18. Procédé selon la revendication 17 caractérisé en ce qu'on utilise comme solvant le toluène ou le xylène.

19. Procédé selon l'une quelconque des revendications 1 à 14 caractérisé en ce que l'on utilise un solvant choisi dans le groupe des hydrocarbures aliphatiques halogénés ou des hydrocarbures alicycliques halogénés.

20. Procédé selon la revendication 19, caractérisé en ce qu'on utilise au moins un solvant choisi dans le groupe des carbures éthyléniques halogénés.

21. Procédé selon la revendication 18 ou 19 caractérisé en ce que les carbures aliphatiques et les hydrocarbures alicycliques précités sont en C₁ - C₄.

22. Procédé selon la revendication 20 caractérisé en ce qu'on utilise au moins un solvant choisi parmi le dichloréthylène, le trichloréthylène et le tétrachloréthylène.

23. Procédé selon l'une quelconque des revendications précédentes caractérisé en ce qu'on utilise une quantité d'hydrophobant variant entre 0,1 % et 100 % en poids par rapport à l'oxyde, exprimé en matière sèche.

24. Procédé selon la revendication 3 caractérisé en ce qu'on utilise une amine à nombre d'atomes de carbone au plus égal à 4 et en ce que la mise en contact et le mélange de l'amine, du solvant et de la suspension ou du sol d'oxyde se fait à une température d'au moins 50°C, plus particulièrement 80°C.

25. Procédé selon l'une quelconque des revendications précédentes caractérisé en ce qu'on utilise une quantité de solvant telle que le rapport volume de solvant exprimé en litre/poids d'oxyde en kilo varie entre 0,1 et 5, de préférence 0,2 et 3.

26. Procédé selon l'une quelconque des revendications précédentes caractérisé en ce qu'on mélange dans un premier temps la suspension ou le sol de l'oxyde précité avec le solvant et en ce qu'on introduit dans un deuxième temps l'hydrophobant dans le mélange ainsi obtenu.

27. Procédé selon l'une quelconque des revendications 1 à 25 caractérisé en ce qu'on mélange dans un premier temps la suspension ou le sol de l'oxyde précité avec l'hydrophobant et en ce qu'on introduit dans un deuxième temps le solvant dans le mélange ainsi obtenu.

28. Procédé selon l'une quelconque des revendications 1 à 25 caractérisé en ce qu'on mélange dans un premier temps le solvant et l'hydrophobant et en ce que dans un deuxième temps on met en présence le mélange ainsi obtenu avec la suspension ou le sol de l'oxyde précité.

29. Procédé selon l'une quelconque des revendications précédentes, caractérisé en ce qu'après séparation de la phase liquide on lave les granulés avec de l'eau ou de l'eau saturée en solvant précité.

30. Procédé selon l'une quelconque des revendications précédentes, caractérisé en ce que lesdits granulés présentent une taille moyenne comprise entre 0,05 et 2 mm.

## Claims

1. Process for the preparation of granules based on aluminium oxide, characterised in that it entails the following stages:
- an aqueous suspension or sol of the said oxide, at least one water-repelling agent of the cationic or amphoteric type and at least one organic solvent which is immiscible or nearly immiscible with water are brought into contact and mixed with stirring, whereby a liquid phase which is substantially free from the said oxide and granules based on the said oxide are obtained;
- the abovementioned liquid phase is separated from the granules;
- the said granules are optionally washed, dried and calcined.

2. Process according to Claim 1, characterised in that there is used at least one water-repelling agent chosen from the group comprising primary, secondary and tertiary amines or their salts, quaternary ammonium salts and amino acids or their salts.

3. Process according to Claim 2, characterised in that there is used at least one water-repelling agent chosen from the group of amines containing numbers of carbon atoms at most equal to 6.

4. Process according to Claim 2 or 3, characterised in that an aliphatic amine is used.

5. Process according to Claim 2, characterised in that fatty amines are used.

6. Process according to Claim 2 or 5, characterised in that acetates are used as salts of primary, secondary or tertiary amines.

7. Process according to any one of Claims 2 to 6, characterised in that a diamine is used as the water-repelling agent.

8. Process according to Claim 7, characterised in that there is used a diamine of formula RNH-(CH₂)₃-NH₂, R being a C₈-C₂₂ radical.

9. Process according to Claim 2, characterised in that there is used a quaternary ammonium salt of formula (1) 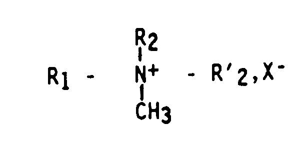 R₁ being an alkyl or alkenyl radical with, preferably, a number of carbon atoms equal to or greater than 6,
R₂ and R'₂ being alkyl, alkyloxy or alkylphenyl radicals, which are identical or different, and X being an anion.

10. Process according to Claim 2, characterised in that there are used quaternary diammoniums of formula (2):
R₃R₄R₅N⁺-(CH₂)ₙ-N⁺R₆R₇R₈,2X⁻
R₃ being an alkyl or alkenyl radical with a number of carbon atoms equal to or greater than 8;
R₄, R₅, R₆, R₇ and R₈ being hydrogen or alkyl radicals,
it being possible for R₄, R₅, R₆ or R₇ to be identical or different;
n being a number of between 1 and 3;
X being an anion.

11. Process according to Claim 7, characterised in that there are used diamine salts of formula (3):
[R₃ R₄ R₅ N-(CH₂)ₙ - NR₆ R₇ R₉]²⁺ (R₁₀ COO)₂ ²⁻
R₃, R₄, R₅, R₆, R₇ and n being as defined above,
R₉ being hydrogen or an alkyl radical and R₁₀ being an alkyl radical, with a number of carbon atoms equal to or greater than 8.

12. Process according to Claim 2, characterised in that there are used the amino acids or their salts of formula (4) or (5): 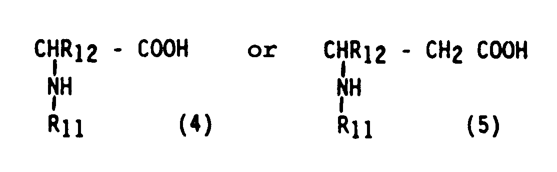 R₁₁ and R₁₂ being hydrogen or an alkyl radical,
R₁₁ and R₁₂ not both being hydrogen.

13. Process according to one of Claims 1 or 2, characterised in that there are used, as water-repelling agent, compounds of formula (6): 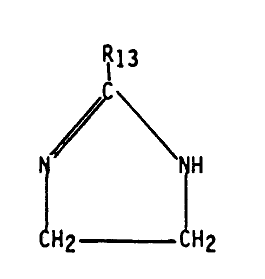 in which R₁₃ is a C₈-C₂₂ alkyl radical,
or salts of the derivatives of formula (7): 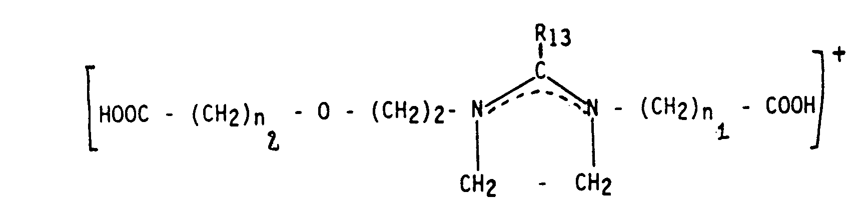 in which n₁ and n₂ are identical or different integers which can be of between 1 and 4.

14. Process according to one of Claims 1 or 2, characterised in that there are used, as water-repelling agent, compounds of formula (8):
R₁₄-C₅H₄ NR₁₅⁺ X⁻
X being a halogen, especially chlorine, R₁₄ being a radical corresponding to the carbon chain of a fatty acid and R₁₅ being an alkyl radical.

15. Process according to any one of Claims 1 to 14, characterised in that a solvent is used chosen from the group comprising esters, ethers and ketones.

16. Process according to Claim 15, characterised in that an acetic ester is used as solvent.

17. Process according to any one of Claims 1 to 14, characterised in that a solvent chosen from the group of benzene hydrocarbons is used.

18. Process according to Claim 17, characterised in that toluene or xylene is used as solvent.

19. Process according to any one of Claims 1 to 14, characterised in that a solvent chosen from the group of halogenated aliphatic hydrocarbons or halogenated alicyclic hydrocarbons is used.

20. Process according to Claim 19, characterised in that at least one solvent chosen from the group of halogenated ethylenic hydrocarbons is used.

21. Process according to Claim 18 or 19, characterised in that the abovementioned aliphatic hydrocarbons and alicyclic hydrocarbons are C₁-C₄ compounds.

22. Process according to Claim 20, characterised in that at least one solvent chosen from dichloroethylene, trichloroethylene and tetrachloroethylene is used.

23. Process according to any one of the above claims, characterised in that a quantity of water-repelling agent varying between 0.1 % and 100 % by weight with respect to the oxide, expressed as solids, is used.

24. Process according to Claim 3, characterised in that an amine is used containing a number of carbon atoms at most equal to 4 and in that the amine, the solvent and the suspension or sol of oxide are brought into contact and mixed at a temperature of at least 50°C, more particularly 80°C.

25. Process according to any one of the above claims, characterised in that a quantity of solvent is used such that the ratio volume of solvent, expressed in litres/weight of oxide in kilograms, varies between 0.1 and 5, preferably 0.2 and 3.

26. Process according to any one of the above claims, characterised in that, in a first step, the suspension or sol of the abovementioned oxide is mixed with the solvent and in that, in a second step, the water-repelling agent is introduced into the mixture thus obtained.

27. Process according to any one of Claims 1 to 25, characterised in that, in a first step, the suspension or sol of the abovementioned oxide is mixed with the water-repelling agent and in that, in a second step, the solvent is introduced into the mixture thus obtained.

28. Process according to any one of Claims 1 to 25, characterised in that, in a first step, the solvent and the water-repelling agent are mixed and in that, in a second step, the mixture thus obtained is brought into contact with the suspension or sol of the abovementioned oxide.

29. Process according to any one of the above claims, characterised in that, after separation of the liquid phase, the granules are washed with water or with water saturated with an abovementioned solvent.

30. Process according to any one of the above claims, characterised in that the said granules have a mean size of between 0.05 and 2 mm.

## Patentansprüche

1. Verfahren zur Herstellung von Granulaten auf Aluminiumoxid-Basis, dadurch gekennzeichnet, daß es die folgenden Stufen umfaßt:
man bringt zusammen und mischt unter Rühren eine Suspension oder ein wäßriges Sol des Oxids,zumindest ein Hydrophobierungsmittel von kationischen oder amphoteren Typ und zumindest ein mit Wasser wenig oder nicht mischbares, organisches Lösungsmittel, infolgedessen man eine im wesentlichen von dem Oxid freie, flüssige Phase und Granulate auf Basis des Oxids erhält;
man trennt die vorstehende, flüssige Phase von den Granulaten;
man wäscht gegebenenfalls, man trocknet und man calciniert die Granulate.

2. Verfahren gemäß Anspruch 1, dadurch gekennzeichnet, daß man zumindest ein Hydrophobierungsmittel, ausgewählt unter den primären, sekundären, tertiären Aminen oder deren Salzen, den quaternären Ammoniumsalzen, den Aminosäuren oder deren Salzen, verwendet.

3. Verfahren gemäß Anspruch 2, dadurch gekennzeichnet, daß man zumindest ein Hydrophobierungsmittel, ausgewählt unter den Aminen mit einer Anzahl an Kohlenstoffatomen von höchstens 6, verwendet.

4. Verfahren gemäß Anspruch 2 oder 3, dadurch gekennzeichnet, daß man ein aliphatisches Amin verwendet.

5. Verfahren gemäß Anspruch 2, dadurch gekennzeichnet, daß man Fettamine verwendet.

6. Verfahren gemäß Anspruch 2 oder 5, dadurch gekennzeichnet, daß man Acetate als primäre, sekundäre oder tertiäre Aminsalze verwendet.

7. Verfahren gemäß einem der Ansprüche 2 bis 6, dadurch gekennzeichnet, daß man ein Diamin als Hydrophobierungsmittel verwendet.

8. Verfahren gemäß Anspruch 7, dadurch gekennzeichnet, daß man ein Diamin der Formel RNH - (CH₂)₃ - NH₂ verwendet, wobei R ein C₈₋₂₂-Rest ist.

9. Verfahren gemäß Anspruch 2, dadurch gekennzeichnet, daß man ein quaternäres Ammoniumsalz der Formel (1) 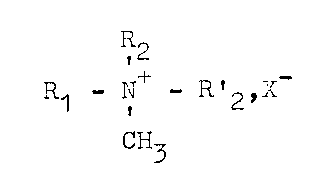 verwendet, wobei R₁ einen Alkyl- oder Alkenylrest mit vorzugsweise einer Anzahl an Kohlenstoffatomen gleich oder höher als 6 bedeutet, R₂ und R'₂ gleiche oder verschiedene Alkyl-, Alkyloxy- oder Alkylphenylreste sind und X ein Anion bedeutet.

10. Verfahren gemäß Anspruch 2, dadurch gekennzeichnet, daß man quaternäre Diammoniumverbindungen der Formel (2)
R₂ R₄ R₅ N⁺ - (CH₂)ₙ - N⁺R₆R₇R₈,2X⁻
verwendet, wobei
R₃ einen Alkyl- oder Alkenylrest mit einer Anzahl an Kohlenstoffatomen gleich oder höher als 8 bedeutet;
R₄,R₅,R₆,R₇ und R₈ Wasserstoff oder Alkylreste sind, wobei
R₄,R₅,R₆ oder R₇ gleich oder verschieden sein können;
n eine Zahl zwischen 1 und 3 bedeutet;
X ein Anion ist.

11. Verfahren gemäß Anspruch 7, dadurch gekennzeichnet, daß man Salze von Diaminen der Formel (3)
[R₃ R₄ R₅ N-(CH₂)ₙ-NR₆ R₇ R₉]²⁺ (R₁₀COO)₂ ²⁻
verwendet, wobei R₃, R₄, R₅, R₆, R₇ und n wie vorstehend definiert sind, R₉ Wasserstoff oder einen Alkylrest bedeutet, R₁₀ einen Alkylrest mit einer Anzahl an Kohlenstoffatomen gleich oder höher als 8 bedeutet.

12. Verfahren gemäß Anspruch 2, dadurch gekennzeichnet, daß man Aminosäuren oder deren Salze der Formel (4) oder (5) 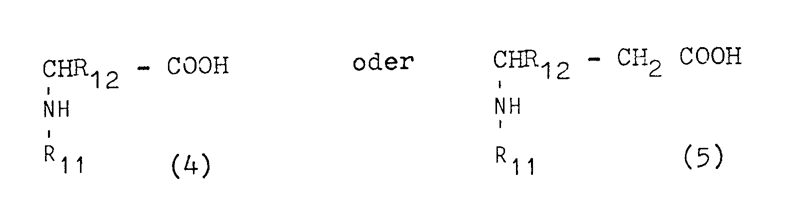 verwendet, wobei R₁₁, R₁₂ Wasserstoff oder einen Alkylrest bedeuten und R₁₁ und R₁₂ nicht gleichzeitig Wasserstoff sind.

13. Verfahren gemäß einem der Ansprüche 1 oder 2, dadurch gekennzeichnet, daß man als Hydrophobierungsmittel Verbindungen der Formel (6) 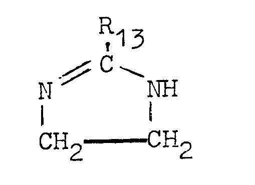 worin R₁₃ einen C₈₋₂₂-Alkylrest wiedergibt, oder Salze der Derivate der Formel (7) 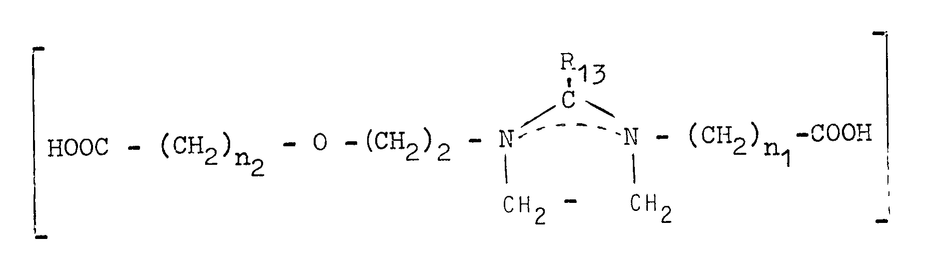 worin n₁ und n₂ gleiche oder verschiedene ganze Zahlen, die zwischen 1 und 4 liegen können, bedeuten, verwendet.

14. Verfahren gemäß einem der Ansprüche 1 oder 2, dadurch gekennzeichnet, daß man als Hydrophobierungsmittel Verbindungen der Formel (8)
R₁₄ - C₅H₄ NR⁺₁₅, X⁻
verwendet, wobei X ein Halogen, insbesondere Chlor, ist, R₁₄ einen der Kohlenstoffkette einer Fettsäure entsprechenden Rest darstellt und R₁₅ ein Alkylrest ist.

15. Verfahren gemäß einem der Ansprüche 1 bis 14, dadurch gekennzeichnet, daß man ein Lösungsmittel, ausgewählt unter Estern, Ethern und Ketonen, verwendet.

16. Verfahren gemäß Anspruch 15, dadurch gekennzeichnet, daß man als Lösungsmittel einen Essigsäureester verwendet.

17. Verfahren gemäß einem der Ansprüche 1 bis 14, dadurch gekennzeichnet, daß man ein Lösungsmittel, ausgewählt unter den benzolischen Kohlenwasserstoffen, verwendet.

18. Verfahren gemäß Anspruch 17, dadurch gekennzeichnet, daß man als Lösungsmittel Toluol oder Xylol verwendet.

19. Verfahren gemäß einem der Ansprüche 1 bis 14, dadurch gekennzeichnet, daß man ein Lösungsmittel, ausgewählt unter den halogenierten, aliphatischen Kohlenwasserstoffen oder den halogenierten, alicyclischen Kohlenwasserstoffen, verwendet.

20. Verfahren gemäß Anspruch 19, dadurch gekennzeichnet, daß man zumindest ein Lösungsmittel, ausgewählt unter den halogenierten, ethylenischen Kohlenwasserstoffen, verwendet.

21. Verfahren gemäß Anspruch 18 oder 19, dadurch gekennzeichnet, daß die vorstehenden aliphatischen Kohlenwasserstoffe und alicyclischen Kohlenwasserstoffe solche mit C₁₋₄ sind.

22. Verfahren gemäß Anspruch 20, dadurch gekennzeichnet, daß man zumindest ein Lösungsmittel, ausgewählt unter Dichlorethylen, Trichlorethylen und Tetrachlorethylen, verwendet.

23. Verfahren gemäß einem der vorhergehenden Ansprüche, dadurch gekennzeichnet, daß man eine Menge an Hydrophobierungsmittel verwendet, die zwischen 0,1 und 100 Gew.%, bezogen auf das Oxid, ausgedrückt als Trockenmaterial, variiert.

24. Verfahren gemäß Anspruch 3, dadurch gekennzeichnet, daß man ein Amin mit einer Anzahl an Kohlenstoffatomen von höchstens gleich 4 verwendet und daß das Inkontaktbringen und das Mischen des Amins,des Lösungsmittels und der Suspension oder des Sols des Oxids bei einer Temperatur von zumindest 50^{o}C, insbesondere 80^{o}C, erfolgen.

25. Verfahren gemäß einem der vorhergehenden Ansprüche, dadurch gekennzeichnet, daß man eine derartige Lösungsmittelmenge verwendet, daß das Verhältnis Lösungsmittelvolumen, ausgedrückt in Liter/Gewicht des Oxids in Kilo zwischen 0,1 und 5, vorzugsweise 0,2 und 3, variiert.

26. Verfahren gemäß einem der vorhergehenden Ansprüche, dadurch gekennzeichnet, daß man zuerst die Suspension oder das Sol des vorstehenden Oxids mit dem Lösungsmittel mischt und daß man zu einem späteren Zeitpunkt das Hydrophobierungsmittel in das so erhaltene Gemisch einbringt.

27. Verfahren gemäß einem der Ansprüche 1 bis 25, dadurch gekennzeichnet, daß man zuerst die Suspension oder das Sol des vorstehenden Oxids mit dem Hydrophobierungsmittel mischt und daß man zu einem späteren Zeitpunkt das Lösungsmittel in das so erhaltene Gemisch einbringt.

28. Verfahren gemäß einem der Ansprüche 1 bis 25, dadurch gekennzeichnet, daß man zuerst das Lösungsmittel und das Hydrophobierungsmittel mischt und daß man zu einem späteren Zeitpunkt das so erhaltene Gemisch mit der Suspension oder dem Sol des vorstehenden Oxids zusammenbringt.

29. Verfahren gemäß einem der vorhergehenden Ansprüche, dadurch gekennzeichnet, daß man nach dem Abtrennen der flüssigen Phase die Granulate mit Wasser oder mit an vorstehendem Lösungsmittel gesättigtem Wasser wäscht.

30. Verfahren gemäß einem der vorhergehenden Ansprüche, dadurch gekennzeichnet, daß die Granulate eine durchschnittliche Teilchengröße zwischen 0,05 und 2 mm besitzen.
